(19) Europäisches Patentamt
European Patent Office
Office européen des brevets

(11) **EP 2 219 422 B1**

(12) **EUROPEAN PATENT SPECIFICATION**

(45) Date of publication and mention
of the grant of the patent:
**05.10.2011 Bulletin 2011/40**

(51) Int Cl.:
*H05B 41/288* (2006.01)   *H05B 41/38* (2006.01)

(21) Application number: **10151459.4**

(22) Date of filing: **22.01.2010**

(54) **Discharge lamp lighting circuit having a starter circuit**

Entladungslampenlichtstromkreis mit einem Starterstromkreis

Circuit d'éclairage de lampe à décharge doté d'un circuit de démarrage

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.02.2009 JP 2009030460**

(43) Date of publication of application:
**18.08.2010 Bulletin 2010/33**

(73) Proprietor: **Koito Manufacturing Co., Ltd.
Tokyo 108-8711 (JP)**

(72) Inventors:
• **Muramatsu, Takao
Shizuoka 424-8764 (JP)**
• **Ito, Masayasu
Shizuoka 424-8764 (JP)**
• **Yanagidu, Shouhei
Shizuoka 424-8764 (JP)**

(74) Representative: **Neobard, William John et al
Kilburn & Strode LLP
20 Red Lion Street
London WC1R 4PJ (GB)**

(56) References cited:
**JP-A- 10 321 393      US-A1- 2003 111 969
US-A1- 2007 247 088**

• **DIVAKAR B P ET AL: "Voltage Multiplier
Integrated HID Ballast and the Application of
Triple Insulated Wire in the Design of Igniter
Transformer" POWER ELECTRONICS SYSTEMS
AND APPLICATIONS, 2006. ICPESA '06. 2ND
INTERNATIONAL CONFERENCE ON, IEEE, PI
LNKD- DOI:10.1109/PESA.2006.343114, 1
November 2006 (2006-11-01), pages 277-282,
XP031072978 ISBN: 978-962-367-544-4**

**Description**

The present invention relates to a discharge lamp lighting circuit provided with a starter circuit.

In recent years, metal halide lamps (hereinafter referred to as discharge lamps) have been in wider use as automotive lamps (headlamps) replacing conventional halogen lamps having a filament or filaments. The discharge lamps feature better luminance efficiency and longer life than the halogen lamps. However, the discharge lamps require several tens to several hundreds of volts as drive voltage, and thus they cannot be directly driven by a vehicular battery of 12 V (or 24 V). For vehicular applications, therefore, the installment of a discharge lamp lighting circuit (also called an electrical ballast) is required.

A discharge lamp lighting circuit disclosed in Japanese Patent Application Publication No. JP3384323(B2) includes a DC-DC converter for boosting the battery voltage, a switching circuit, such as an H-bridge circuit, for AC-converting the output voltage of the DC-DC converter, a starter circuit, and a control circuit for controlling these circuit blocks.

US 2003/0111969 discloses a 'Ballast for a Discharge Lamp'. A ballast for a discharge lamp includes a DC-DC converter which provides a regulated DC output so as to start and keep operating the lamp. A controller is included to give a closed-loop control for regulating the DC output based upon a monitored DC output. The controller also provides an open-loop control which interrupts the closed-loop control for a limited period immediately after the initiation of the lamp discharge in order to supplement a sufficient lamp current which would not expected with the closed-loop control, thereby successfully complementing the lamp start and proceeding to the stable lamp operation.

JP 10321393 discloses a 'Discharge Lamp Device'. Each power source terminal Vcc of IC elements is connected to the secondary side of a flyback transformer. A first power source circuit comprising a resistance and a Zener diode is arranged on the secondary side of the flyback transformer, and applied voltage to the power source terminal Vcc becomes specified voltage V2 (15 V) generated with the first power source circuit. The IC elements utilize secondary voltage (the lamp voltage) generated in the secondary winding, and are controlled within an H bridge control circuit. Even if battery voltage dropped, driving voltage can be obtained from the secondary side of the flyback transformer, and MOS transistors are stably driven and controlled.

US 2007/0247088 discloses a 'Discharge Lamp Ballast Apparatus'. A discharge lamp ballast apparatus includes a DC/DC converter having a transformer T1 and a DC/DC converter having a transformer T2, which are connected in parallel; a control section for controlling the output voltages of the DC/DC converters by varying their duties with shifting the operation phases of the transformers T1 and T2 of the DC/DC converters; and a voltage-multiplier rectifier circuit having diodes and capacitors for generating a high voltage used for starting a discharge lamp by utilizing the potential difference between the output voltages of the transformers T1 and T2.

B.P. Divakar et al., discloses a 'Voltage Multiplier Integrated HID Ballast and the Application of Triple Insulated Wire in the Design of Igniter Transformer'. The application of HID lamps in automobiles is gaining popularity owing to the color of the light as well as high lumen/watt ratio from the lamp. In the present paper a voltage multiplier integrated with the secondary winding of the DC converter transformer generates the required voltage to be applied to the igniter. The proposed method not only eliminates one auxiliary winding but also reduces the voltage across the switch on the primary side and consequently the rating of the switch is reduced. The use of triple insulated wire on an RM core in the design of the high voltage igniter is also presented in the paper. A brief review of the HID circuits is done and compared with the proposed circuit. Experimental results from the prototype are presented.

A starter circuit is a circuit that applies a high-voltage pulse to a discharge lamp to start the lighting. The starter circuit has a transformer the secondary coil of which is connected to the discharge lamp. The starter circuit amplifies the output voltage of a DC-DC converter and then applies it to a primary coil in the form of pulses. Thus high-voltage pulses are generated in the secondary coil of the transformer.

In order to generate the high-voltage pulses, a large electric power is supplied to the starter circuit for a short period of time. Thus a large current may instantaneously flow across an element of the starter circuit, such as a rectifying diode, and therefore in such a case a large-rated diode must be used. Such a diode is large-size and costly, thereby increasing the size of the starter circuit and possibly leading to an increase in the cost .

The present invention has been made in view of the foregoing circumstances, and a purpose thereof is to provide a discharge lamp lighting circuit having a reduced-sized starter circuit or provide a discharge lamp lighting circuit at low cost.

One embodiment of the present invention relates to a discharge lamp lighting circuit. This discharge lamp lighting circuit comprises: a DC-DC converter configured to output a drive voltage to be supplied to a discharge lamp to be driven; and a starter circuit configured to generate a high-voltage pulse to cause break-down in the discharge lamp, so that discharge starts, and light is emitted. The DC-DC converter includes: an output capacitor for outputting the drive voltage; and an output diode to one and of which a varying voltage is applied and to the other end of which one end of the output capacitor is connected. The starter circuit includes: a high-voltage transformer whose secondary winding is connected to the discharge lamp; and a voltage amplifier circuit for amplifying the drive voltage and generating a charging voltage to be supplied to a primary winding of the high-voltage transformer, the voltage amplifier circuit having a first input terminal connected to the one end of the output diode and a second input terminal connected to the other end of the output diode. The discharge lamp lighting circuit further comprises at least one current limiting element, for limiting a current, which is provided at least one of between the one end of the output diode and the first input terminal and between the other end of the output diode and the second input terminal.

The "current limiting element" may be a resistor or a transistor, for instance.

Aspects of the invention are identified in the accompanying independent claims.

Embodiments will now be described by way of example only, with reference to the accompanying drawings in which:

FIG. 1 is a circuit diagram showing a configuration of a discharge lamp lighting circuit according to an embodiment of the present invention and components connected thereto;
FIG. 2 is a circuit diagram showing a configuration of an on-period limiting circuit;
FIG. 3 is a timing chart showing operating states of a discharge lamp lighting circuit of FIG. 1;
FIGS. 4A and 4B are timing charts showing operating states after a DC period of a discharge lamp lighting circuit of FIG. 1;
FIGS. 5 is a circuit diagram showing a voltage amplifier circuit of a discharge lamp lighting circuit according to a comparative technique and its periphery; and
FIGS. 6A and 6B are circuit diagrams each showing a voltage amplifier circuit and its periphery according to modifications.

The present invention will now be described based on referred embodiments with reference to the accompanying drawings. Like reference numbers show like parts.

In the present specification, the state represented by the phrase "the member A is connected to the member B" includes a state in which the member A is indirectly connected to the member B via another member that does not affect the electric connection therebetween, in addition to a state in which the member A is physically and directly connected to the member B. Similarly, the state represented by the phrase "the member C is provided or connected between the member A and the member B" includes a state in which the member A is indirectly connected to the member C, or the member B is indirectly connected to the member C via another member that does not affect the electric connection therebetween, in addition to a state in which the member A is directly connected to the member C, or the member is directly connected to the member C.

High-voltage pulses need to be applied across a discharge lamp to start the lighting of a discharge lamp. A discharge lamp lighting circuit according to an embodiment of the present invention is provided with a starter circuit that generates the high-voltage pulses after a power-on. The electric power is supplied to this starter circuit from an output side of a DC-DC converter that applies a drive voltage to the discharge lamp. Current limiting resistors with which to limit the input current are connected on a path of the input current flowing from this DC-DC converter to the starter circuit. This arrangement can prevent an excessive current from flowing through elements such as diodes in the starter circuit.

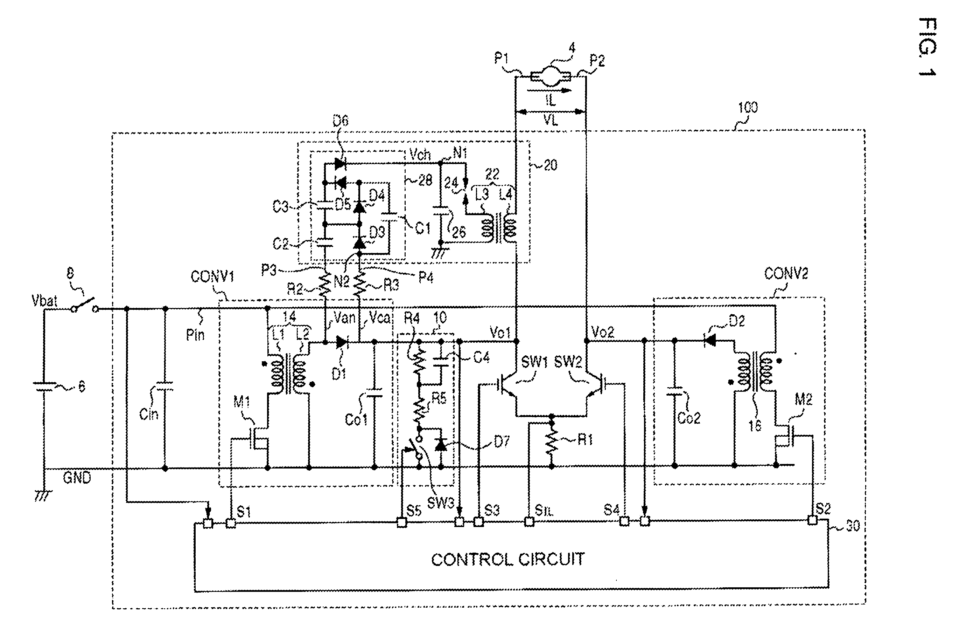

FIG. 1 is a circuit diagram showing a configuration of a discharge lamp lighting circuit 100 according to this embodiment and components connected thereto. The discharge lamp lighting circuit 100 drives a discharge lamp 4 which is a metal halide lamp. The discharge lamp lighting circuit 100 is connected to a vehicular battery (hereinafter referred to simply as a battery) 6 and a power supply switch 8.

The battery 6 generates a DC voltage Vbat of 12 V (or 24 V). The power supply switch 8, which is connected in series to the battery 6, is a relay switch for controlling the on and off of the discharge lamp 4. As the power supply switch 8 turns on, the battery voltage Vbat is supplied from the battery 6 to the discharge lamp lighting circuit 100.

The discharge lamp lighting circuit 100 boosts a smoothed battery voltage Vbat, AC-converts it, and supplies the AC-converted voltage across the discharge lamp 4. A description is given hereunder of a detailed configuration of the discharge lamp lighting circuit 100.

The discharge lamp lighting circuit 100 includes a first DC-DC converter CONV1, a second DC-DC converter CONV2, a shared circuit 10, a starter circuit 20, a first switch SW1, a second switch SW2, a current sensing resistor R1, a first current limiting resistor R2, a second current limiting resistor R3, a control circuit 30, and an input capacitor Cin.

The input capacitor Cin, which is connected in parallel with the battery 6, smoothes the battery voltage Vbat. More specifically, the input capacitor Cin, located in the vicinity of a first transformer 14 and a second transformer 16, performs a function of smoothing the voltage disturbed by the switching operation of the first DC-DC converter CONV1 and the second DC-DC converter CONV2.

The control circuit 30, which includes a functional IC (integrated circuit) for controlling the discharge lamp lighting circuit 100 as a whole, not only controls the operation sequence of the discharge lamp lighting circuit 100 but also adjusts the electric power to be supplied to the discharge lamp 4. The control circuit 30 executes the following sequences to light up the discharge lamp 4 and stabilize the light output thereof :

1. Power on
2. Breakdown
3. DC period
4. Run-up
5. Steady lighting

The details of each sequence will be discussed later.

The first DC-DC converter CONV1, the second DC-DC converter CONV2, the first switch SW1, the second switch SW2, and the control circuit 30 constitute a drive voltage generating unit that generates a drive voltage VL (called "lamp voltage" also) for the discharge lamp 4. In the aforementioned run-up period and steady lighting period, the drive voltage generating unit supplies an AC drive voltage VL of a first frequency f1 (lighting frequency) across the discharge lamp 4. The first frequency f1 is set to 10 kHz or below, or more specifically to about 250 Hz to about 750 Hz. The inverse of the lighting frequency f1 is called a lighting cycle T1 (= 1/f1).

The first DC-DC converter CONV1, which is an insulated switching regulator, includes a first switching element M1, a first transformer 14, a first rectifier diode D1, and a first output capacitor Co1.

A primary coil L1 of the first transformer 14 and the first switching element M1 are connected in parallel with the input capacitor Cin and in series with each other between an input terminal Pin of the first DC-DC converter CONV1 and a ground terminal (GND). The first switching element M1 is constructed of an N-channel MOSFET (Metal Oxide Semiconductor Field Effect Transistor), for instance. One end of a secondary coil L2 of the first transformer 14 is grounded, and the other end thereof is connected to an anode of the first rectifier diode D1. The first output capacitor Co1 is connected between a cathode of the first rectifier diode D1, and a ground terminal.

A first control pulse signal S1 having a second frequency f2, which is higher than the aforementioned first frequency f1, is applied to a control terminal (gate) of the first switching element M1. For instance, the second frequency f2 is 400 kHz in a steady lighting state. The first switching element M1 turns on when the first control pulse signal S1 goes high and turns off when the pulse signal S1 goes low. The on and off of the first switching element M1 causes the voltage of the other end of the secondary wiring L2 of the first transformer 14 to vary. This voltage variation and the rectification by the first rectifier diode D1 charge the first output capacitor Co1.

The first DC-DC converter CONV1 is switchable between an active state and a non-active state. A first output capacitor Co1, which has been charged, supplies a first drive voltage Vo1 (hereinafter referred to "output voltages" also) to a first end P1 (one end P1) of the discharge lamp 4 in the active state.

It, prior to a breakdown of the discharge lamp 4, the load of the discharge lamp lighting circuit 100 is regarded as being open (hereinafter such a case will be referred to as "load-open state"), the first control pulse S1 will be controlled so that the first drive voltage Vo1 may become a target voltage Vt, 400 V, for instance. The control mode of the first DC-DC converter CONV1 is switched before and after the first drive voltage Vo1 reaches the target voltage Vt. A control mode before the first drive voltage Vo1 reaches the target voltage Vt is called a first control mode, whereas a control mode after the first drive voltage Vo1 has reached the target voltage Vt is called a second control mode. In the second control mode, an intermittent control is performed which repeats the start and stop of the first DC-DC converter CONV1 with the boundary being the target voltage Vt. Thus the second frequency f2 of the first control pulse signal S1 in the first control mode is higher than the second frequency f2 in the second control mode.

The second DC-DC converter CONV2 has the same circuit topology as the first DC-DC converter CONV1. That is, a second rectifier diode D2 corresponds to the first rectifier diode D1, a second output capacitor Co2 corresponds to the first output capacitor Co1, a second transformer 16 corresponds to the first transformer 14, and a second switching element M2 corresponds to the first switching element M1. The on-off of the second switching element M2 is controlled by feedback based on the electrical state of the discharge lamp 4, using a second control pulse signal S2 generated by the control circuit 30.

The second DC-DC converter CONV2, which is also switchable between an active state and a non-active state, supplies a second output voltage Vo2 (hereinafter referred to second output voltage" also) to a second end P2 (the other end P2) of the discharge lamp 4 in the active state.

The first switch SW1, which is connected on a first end P1 side of the discharge lamp 4, provides electrical conduction between the first end P1 of the discharge lamp 4 and a fixed voltage terminal (ground terminal) when the first switch SW1 is on. The second switch SW2, which is connected on a second end P2 side of the discharge lam 4, provides electrical conduction between the second end P2 of the discharge lamp 4 and the fixed voltage terminal (ground terminal) when the second switch SW2 is on. It should be noted that IGBT (Insulated Gate Bipolar Transistor) or MOSFET may be suitably used as the first switch SW1 and second switch SW2, but any other alternative device may be used as well. The on and off states of the first switch SW1 and the second switch SW2 are controlled in response to control signals S3 and S4 from the control circuit 30.

The first DC-DC converter CONV1 and the second DC-DC converter CONV2 repeat the active state and the non-active state alternately on a lighting cycle T1 (i.e., first frequency f1). In other words, the active period of the first DC-DC converter CONV1 and the active period of the second DC-DC converter CONV2 are each a half cycle of the lighting cycle T1. Hereinbelow, a state in which the first DC-DC converter CONV1 is active will be referred to as a first state $\phi 1$, and a state in which the second DC-DC converter CONV2 is active will be referred to as a second state $\phi 2$. The first switch SW1 turns on when the second DC-DC converter CONV2 is active, or in the second state $\phi 2$, whereas the second switch SM2 turns on when the first DC-DC converter CONV1 is active, or in the first state $\phi 1$.

In the first state $\phi 1$, a first output voltage Vo1 is applied to the first end P1 of the discharge lamp 4, and a ground voltage (0 V) is applied to the second end P2 thereof. As a result, a drive voltage VL ($\approx$Vo1) in a first polarity is applied to the discharge lamp 4. In the second state $\phi 2$, a second output voltage Vo2 is applied to the second end P2 of the discharge lamp 4, and a ground voltage is applied to the first end P1 thereof . As a result, a drive voltage VL ($\approx$Vo2) in a second polarity, which is the opposite of the first polarity, is applied to the discharge lamp 4.

In the DC period and the steady lighting period, the control circuit 30 repeats the first state $\phi 1$ and the second state $\phi 2$ alternately on the lighting cycle T1. As a result, an AC drive voltage VL is supplied to the discharge lamp 4.

The current sensing resistor R1 is connected on a path of lamp current IL flowing to the discharge lamp 4. In the circuit shown in FIG. 1, the current sensing resistor R1 is connected between a commonly connected emitter of the first switch SW1 and the second switch SW2 and a ground terminal. In the first state $\phi 1$, a lamp current flows in a first polarity (rightward in FIG. 1) to the discharge lamp 4, and in the second state $\phi 2$, a lamp current flows in a second polarity (leftward in FIG. 1) to the discharge lamp 4. In each of the first state $\phi 1$ and the second state $\phi 2$, a voltage drop (called current sensing signal $S_{IL}$) proportional to the lamp current IL occurs in the current sensing resistor R1. The current sensing signal $S_{IL}$, is inputted to the control circuit 30.

The starter circuit 20 generates a high-voltage pulse and applies it to the first end P1 of the discharge lamp 4 to break down the discharge lamp 4. The starter circuit 20 includes a high-voltage transformer 22, a spark gap 24, a starter capacitor 26, and a voltage multiplier circuit 28, herein referred to as a voltage amplifier circuit.

A second winding L4 of the high-voltage transformer 22 is connected to the first end P1 of the discharge lamp 4. One end of a primary winding L3 of the high-voltage transformer 22 is grounded, whereas the other end thereof is connected to one end of the spark gap 24. The spark gap 24 is a known discharge-gap switch which conducts when a breakdown voltage of 800 V, for instance, is applied across the spark gap 24. One end of starter capacitor 26 is grounded. The other end of the starter capacitor 26 is connected to the other end of the spark gap 24. Thus, when the voltage of the starter capacitor 26 exceeds the breakdown voltage, the spark gap 24 conducts and the pulse current flows through the primary winding L3. A high-voltage pulse that occurs in the second winding L4 in response to this pulse current is applied to the first end P1 of the discharge lamp 4.

The voltage amplifier circuit 28 amplifies the first drive voltage Vo1 so as to generate a charging voltage Vch used to charge the starter capacitor 26. The charging voltage Vch is applied on a first connection node N1 between the starter capacitor 26 and the spark gap 24. When the starter capacitor 26 exceeds the breakdown voltage, the spark gap 24 conducts and the current flows through the primary winding L3 of the high-voltage transformer 22. Thus the charging voltage Vch is said to serve as a voltage to be supplied to the primary winding L3 of the high-voltage transformer 22. The voltage amplifier circuit 28 includes a first capacitor C1, a second capacitor C2, a third capacitor C3, a third rectifier diode D3, a fourth rectifier diode D4, a fifth rectifier diode D5, a sixth rectifier diode D6.

One end of the second capacitor C2 is connected to an anode of the first rectifier diode D1 through a first current limiting resistor R2 (described later). The voltage of this anode of the first rectifier diode D1 is called an anode voltage Van. The one end of the second capacitor C2 may be called a first input terminal P3 to the starter circuit 20. An anode of the third rectifier diode D3 and one end of the first capacitor C1 are connected to a cathode of the first rectifier diode D1 through a second current limiting resistor R3 (described later). The voltage at this cathode of the first rectifier diode D1 is called a cathode voltage Vca. A second connection node N2 between the anode of the third rectifier diode D3 and the one end of the first capacitor C1 may be called a second input terminal P4 to the starter circuit 20.

The other end of the second capacitor C2 and a cathode of the third rectifier diode D3 are connected to an anode of the fourth rectifier diode D4, whereas a cathode of the fourth rectifier diode D4 is connected to the other end of the first capacitor C1.

One end of the third capacitor C3 is connected to the other end of the second capacitor C2. The other end of the first capacitor C1 is connected to an anode of the fifth rectifier diode D5, whereas a cathode of the fifth rectifier diode D5 is connected to the other end of the capacitor C3. The other end of the third capacitor C3 is connected to an anode of the sixth rectifier diode D6. A cathode of the sixth rectifier diode D6 is connected to the first connection node N1, and the charging voltage Vch is supplied to the first connection node N1.

Consider a load-open state here. As the on and off of the first switching element M1 causes the anode voltage Van to vary in a range of 0 V to 400 V, for instance, the output capacitor Co1 is charged to about 400 V by the rectifying action of the first rectifier diode D1. Due to the rectifying action of the third rectifier diode D3, the voltage at the other end of the second capacitor C2 also varies in a range of about 400 V to about 800 V in response to the variation of the anode voltage Van. Since 400 V which is equivalent to the charging voltage of the first output capacitor Co1 is applied to the one end of the first capacitor C1, the other end of the first capacitor C1 is about 800 V by the rectifying action of the fourth rectifying diode D4.

As the other end of the second capacitor C2 varies in a range of about 400 V to about 800 V, the voltage at the other end of the third capacitor C3 varies in a range of about 800 V to about 1200 V by the rectifying action of the fifth rectifier diode D5. The voltage at the other end of this third capacitor C3 is applied to the first connection node N1 as the charging voltage Vch through the sixth rectifying diode D6, thus charging the starter capacitor 26,

The first current limiting resistor R2 is provided between the anode of the first rectifying diode D1 and one end of the second capacitor C2 which is the first input terminal P3 of the starter circuit 20. The second current limiting resistor R3 is provided between the cathode of the first rectifying diode D1 and the second connection node N2 which is the second input terminal P4 of the starter circuit 20.

The fist current limiting resistor R2 and the second current limiting resistor R3 limit the amount of current supplied to the starter circuit 20, and regulates the speed at which the starter capacitor 26 is charged.

The voltage applied to the terminals of the first current limiting resistor R2 and the second current limiting resistor R3 is about the level of the target value of the first drive voltage Vo1 at most, about 400 V, for instance. Thus, not so high a withstand performance is required of the first current limiting resistor R2 and the second current limiting resistor R3, In particular, if the discharge lamp lighting circuit 100 is to be formed on a ceramic substrate, the first current limiting resistor R2 and the second current limiting resistor R3 may be formed on the ceramic substrate as printed resistors. In such a case, the size of the discharge lighting circuit 100 can be made smaller and the overall cost can be reduced.

Before the lighting of the discharge lamp 4, namely before a breakdown, the shared circuit 10 increases the discharge speed of the first capacitor Co1 by connecting across the first output capacitor Co1 through a resistor. After the lighting of the discharge lamp 4, namely after the breakdown, the shared circuit 10 aids the arc growth.
The shared circuit 10 includes a bypass resistor R4, a lighting assistant capacitor C4, a lighting assistant resistor R5, a third switch SW3, and a seventh rectifier diode D7.

The lighting assistant capacitor C4, the lighting assistant resistor R5 and the third switch SW3 are connected in series with one another across the first output capacitor Col. The seventh rectifier diode D7 is placed in parallel with the third switch SW3 in such a manner that the anode of the rectifier diode D7 is connected to the ground (GND) side. The third switch SW3 turns on before the discharge lamp 4 lights up, and turns off after it lights up. Thus, the lighting assistant capacitor C4 is charged by the first DC-DC converter CONV1 before the discharge lamp 4 lights up. After the discharge lamp 4 lights up, the power stored in the lighting assistant capacitor C4 is supplied to the discharge lamp 4, which in turn promotes the arc growth.
The on and off of the third switch SW3 is controlled by a bypass signal S5.

The bypass resistor R4 is connected in series with the third switch SW3 across the first output capacitor Co1. The bypass resistor R4 is connected in parallel with the lighting assistant capacitor C4. A bypass current flows through the bypass resistor R4 and the lighting assistant resistor R5 before the discharge lamp 4 lights up and while the starter capacitor 26 is being charged, and the first output capacitor Co1 and the lighting assistant capacitor C4 are discharge due to the bypass current.
As the discharge lamp 4 breaks down to light up, the bypass current flowing through the bypass resistors R stops, so that the output loss of the first DC-DC converter CONV1 caused by the bypass resistor R4 is reduced.

A description is now given of a purpose of providing the bypass resistor R4 and the third switch SW3.
Even when the high-voltage pulse is applied to the discharge lamp 4, the discharge lamp 4 does not break down in some instances. In such a case, the control circuit 30 generates the high-voltage pulses by charging again the starter capacitor 26. Then the control circuit 30 keeps generating the high-voltage pulses until the discharge lamp 4 breaks down .
A period of time from when the voltage amplifier circuit 28 starts to charge the starter capacitor 26 to when the high-voltage pulses are generated is called a pulse interval.

When the high-voltage pulses are to be first generated, the first output capacitor Col and the lighting assistant capacitor C4 are charged from 0 V. Thus, the control circuit 30 controls the first DC-DC converter CONV1 under the first control mode until the first output capacitor Col and the lighting assistant capacitor C4 are charged to the target voltage Vt. In the first control mode, the first switching element M1 is turned on and off using a higher second frequency f2. As a result, the speed of the charging by the starter capacitor 26 when the high-voltage pulses are to be first generated is faster, and the pulse interval is shorter.

When the high-voltage pulses are to be generated from the second time on, the first output capacitor Co1 and the lighting assistant capacitor C4 have been charged to the target voltage Vt. Thus, the control circuit 30 controls the first DC-DC converter CONV1 under the second control mode.
Suppose that the bypass resistor R4 is not provided at all. Then the control circuit 30 will turn on and off the switching element M1 at a second frequency f2 which is lower than the second frequency f2 under the first control mode. As a result, the speed of the charging of the starter capacitor 26 is slower, and the pulse interval as longer.

Nevertheless, according to the present embodiment, the bypass current, which discharges the first output capacitor Co1 and the lighting assistant capacitor C4, flow through the bypass resistor R4 when the high-voltage pulses are to be generated in a load-open state. Thus the discharge speed under the second control mode with Vo1>Vt increases and the cycle of intermittent control becomes short. This increases the second frequency f2 in the second control mode, so that the pulse interval when the high-voltage pulses are to be generated for the second time on can be made shorter. As a result, even if the high-voltage pulses need to be applied a plurality of times in order to cause the discharge lamp 4 to break down, the discharge lamp 4 can be lit up faster.

Since the pulse interval when the high-voltage pulses are to be generated for the second time on is shorter, the lengths of pulse intervals as a whole are stabilized. If the pulse interval is unduly short, there may be cases where the control circuit and its peripheral circuits are not ready to operate in time, so that the start-up of lighting may be unstable and the lighting property deteriorates. If, on the other hand, the length of pulse interval is unduly long, a user may recognize a lighting delay if the lighting failure is repeated several times. This may cause a sense of discomfort and uneasiness in the user. Hence, it is desirable that the lengths of pulse intervals be stabilized at a suitable length.

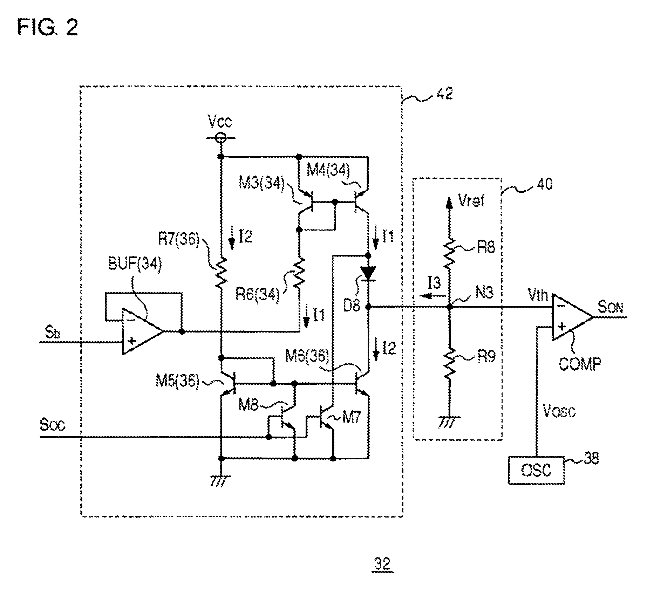

The control circuit 30 includes an on-period limiting circuit 32 which is not shown in FIG. 1. FIG. 2 is a circuit diagram showing a configuration of the on-period limiting circuit 32.

The on-period limiting circuit 32 outputs an on-period limiting signal Son that determines the maximum value of the length of on periods_of the first control pulse signal S1. In the load-open state, the control circuit 30 sets the length of an on-period of the first control pulse signal S1 to be a maximum value determined by the on-period limiting signal Son. Accordingly, the on-period limiting circuit 32 determines the length of the on-period of the first control pulse signal S1 in a load-open state.

In a load-open state, the on-period limiting circuit 32 receives a power supply information signal Sb indicating information on the battery voltage Vbat. The higher the thus received battery voltage Vbat is, the on-period limiting circuit 32 shortens the on-period of the first control pulse signal S1.

The on-period limiting circuit 32 includes a PWM comparator COMP, an oscillator 38, a voltage dividing circuit 40, and a sink/source circuit 42.

The oscillator 38 generates a periodical voltage $v_{cac}$ of triangular or sawtooth waveform of a second frequency f2.

The PWM comparator COMP, which receives a threshold voltage Vth outputted by the voltage dividing circuit 40, generates an on-period limiting signal Son by comparing the threshold signal Vth with the periodical voltage $V_{osc}$. The PWM comparator COMP is structured in a manner such that the lower the threshold voltage Vth is, the maximum value of on-periods determined by the on-period limiting signal Son is smaller.

The voltage dividing circuit 40 sets the threshold voltage Vth which is to be inputted to the PWM comparator COMP. The voltage dividing circuit 40 includes a first voltage dividing resistor R8 and a second voltage dividing resistor R9. The first voltage dividing resistor R8 and the second voltage dividing resistor R9 are connected in series with each other between a predetermined reference voltage Vref and a ground potential. The voltage at a third connection node N3 between the first voltage dividing resistor R8 and the second voltage dividing resistor R9 is inputted to the PWM comparator COMP as the threshold voltage Vth. In the load-open state, a sink/source current I3 is supplied to the third connection node N3 from the sink/source circuit 42, and the threshold voltage Vth is adjusted using the value of this sink/source current I3.

Hereinafter, the direction of the sink/source current I3 in the case where it is pulled from the third connection node N3 to the sink/source circuit 42 is defined to be the positive direction.

Upon receipt of the power supply information signal Sb, the sink/source circuit 42 increases the value of sink/source current I3 pulled from the third connection node N3 of the voltage dividing circuit 40 as the battery voltage Vbat gets high. The sink/source circuit 42 includes a buffer BUF, a first reference resistor R6, a second reference resistor R7, a first reference-side transistor M3, a first output-side transistor M4, a second reference-side transistor M5, a second output-side transistor M6, a first switching transistor M7, a second switching transistor M8, and an eighth rectifier diode D8.

The buffer BUF buffers the power supply information signal Sb and outputs it. The buffer BUF, the first reference resistor R6, the first reference-side transistor M3 and the first output-side transistor M4 constitute a first current mirror circuit 34 whereby the same current as a first reference current I1 flowing through the first reference resistor R6 is outputted from a collector of the first output-side transistor M4. PNP bipolar transistors are used as the first reference-side transistor M3 and the first output-side transistor M4. Emitters of the first reference-side transistor M3 and the first output-side transistor M4 are connected in common to a power supply voltage Vcc. The collector of the first output-side transistor M4, which is an output terminal of the first current mirror circuit 34, is connected to an anode of the eighth rectifier diode D8.

Hereinafter, the direction of the first reference current I1 flowing from the collector of the first output-side transistor M4 toward the anode of the eighth rectifier diode D8 is defined to be the positive direction.

The second reference resistor R7, the second reference-side transistors M5 and the second output-side transistor M6 constitute a second current mirror circuit 36 whereby the same current as a second reference current 12 flowing through the second reference resistor R7 is pulled from a collector of the second output-side transistor M6. NPN bipolar transistors are used as the second reference-side transistor M5 and the second output-side transistor M6. The power supply voltage Vcc is applied to one end of the second reference resistor R7, whereas the other end thereof is connected to a collector of the second reference-side transistor M5. Emitters of the second reference-side transistor M5 and the second output-side transistor M6 are grounded. The collector of the second output-side transistor M6, which is an output terminal of the second current mirror circuit 36, is connected to the third connection node N3.

Hereinafter, the direction of the second reference current I2 flowing from the collector of the second output-side transistor M6 toward the third connection node N3 is defined to be the positive direction.

A relation expressed by the following Equation (1) holds among the first reference current I1, the second reference current I2, and the sink/source current I3.

$$I3 = I2 - I1 \quad \text{--- Equation (1)}$$

Now consider a case where forward voltages $V_{BE}$ of the first reference-side transistor M3, the first output-side transistor M4, a second reference-side transistor M5 and a second output-side transistor M6 are regarded as being the same. Then the first reference current I2 outputted by the first current mirror circuit 34 is expressed by the following Equation (2).

$$I1 = (Vcc - V_{BE} - Vb)/R6 \quad \text{--- Equation (2)}$$

where Vb is the voltage of the power supply information signal Sb and R6 is the resistance value of the first reference resistor R6.

The second reference current I2 outputted from the second current mirror circuit 36 is expressed by the following Equation (3).

$$I2 = (Vcc - V_{BE})/R7 \quad \text{--- Equation (3)}$$

where R7 is the resistance value of the second reference resistor R7. Now consider a case where the resistance value of the first reference resistor R6 is the same as the resistance value of the second reference resistor R7. Then, the following Equation (4) is derived from the combination of Equation (1), Equation (2) and Equation (3).

$$I3 = Vb/R6 \quad \text{--- Equation (4)}$$

Equation (4) indicates that the sink/source current I3 supplied from the sink/source circuit 42 is independent of the forward voltage $V_{BE}$. Hence, even though the forward voltage $V_{BE}$ varies in response to the change in temperature and the like, the sink/source current I3 is insusceptible to the adverse effects resulting from the varied forward voltage $V_{BE}$, so that further stable operation can be achieved in a wide temperature range.

The first switching transistor M7 and the second switching transistor M8 are controlled by a load-open signal Soc which is negated (going low) in a load-open state.

As a load-open signal Soc goes high, the first switching transistor M7 bypasses the first reference current I1 from an anode side of the eighth rectifier diode D8 to the ground. As the load-open signal Soc goes high, the second switching transistor M8 sets the commonly connected base of the second current mirror circuit 36 to a ground potential. Thus, as the load-open signal Soc goes high, the sink/source current I3 is not supplied to the third connection node N3, so that the threshold voltage Vth is fixed to a value determined by the ratio of the first voltage dividing resistor R8 and the second voltage dividing resistor R9. As a result, the maximum value of on-periods of the first control pulse signal S1 determined by the on-period limiting signal Son can be fixed when the discharge lamp 4 is lit up.

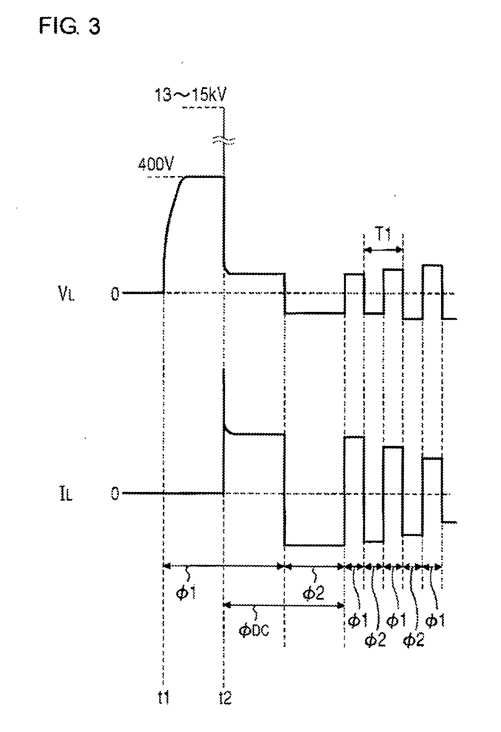

The above has described the structure of the discharge lamp lighting circuit 100. A description is now given of an operation thereof following the sequences. FIG. 3 is a timing chart showing an operating state of the discharge lamp lighting circuit 100. The vertical axis and the horizontal axis in FIG. 3 are scaled as appropriate for ease of understanding, and each waveform shown in FIG. 3 is simplified for easier understanding.

1. Power on

As a user turns on the power supply switch 8 at time t1, the discharge lamp lighting circuit 100 is started. The control circuit 30 sets the first DC-DC converter CONV1 to the active state and the first switch SW1 to an off state (the first state $\phi$1), and boosts the battery voltage Vbat to a predetermined target voltage Vt (400 V).

During this period, the first output capacitor Co1 and the lighting assistant capacitor C4 of the first DC-DC converter CONV1 are charged with the voltage Vo1 ($\approx$400 V) so as to store the energy .

2. Breakdown

The voltage amplifier circuit 28 boosts the first drive voltage Vo1 of the first DC-DC converter CONV1 so as to charge the starter capacitor 26. When the voltage of the starter capacitor 26 exceeds the breakdown voltage of the spark gap 24, the starter capacitor 26 conducts and a pulse of current is supplied to the primary winding L3 of the high-voltage transformer 22. Then, a high-voltage pulse of 20 kV or more in response to the turn ratio of the high-voltage transformer 22 occurs in the second winding L4 of the high-voltage transformer, 22. As a result, the drive voltage of the discharge lamp 4 rises to about 13 to 15 kV and breaks down to start a glow discharge at time t2. As a result, the drive voltage of the discharge lamp 4 rises to about 13 to 15 kV and causes the discharge lamp 4 to break down to start a glow discharge at time t2.
If the discharge lamp 4 does not break down with the initial high-voltage pulse, the starter capacitor 26 will be charged again and a high-voltage pulse will be applied to the discharge lamp 4.
As the discharge lamp 4 breaks down, a high current of several amperes (e.g., about 10 A) is supplied to the discharge lamp 4 from the first output capacitor Col and the lighting assistant capacitor C2 to prevent the discharge lamp 4 from going out.

3. DC period $\phi_{DC}$

After a breakdown, the control circuit 30 performs a control of firstly delivering the lamp current IL in the first state $\phi$1, for about 10 ms, in the first polarity. Then the control circuit 30 switches the state to the second state $\phi$2 and performs a control of delivering the lamp current IL for about 10 ms in the second polarity. This period is called a DC period $\phi_{DC}$. In this DC period $\phi_{DC}$, a transition is made from the glow discharge to an arc discharge.

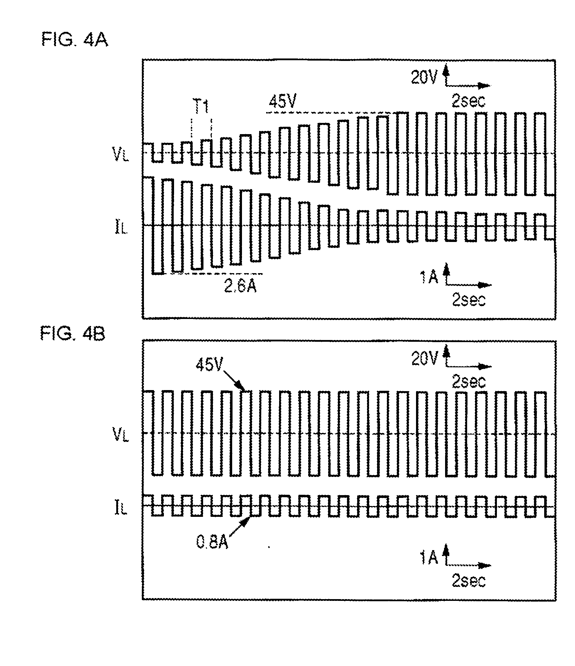

FIGS. 4A and 4B are timing charts showing operating states after the DC period of the discharge lamp lighting circuit 100. The vertical axis and the horizontal axis in FIGS. 4A and 4B are scaled as appropriate for ease of understanding, and each waveform shown in FIGS, 4A and 4B is simplified for easier understanding. FIGS. 4A and 4B shows waves in a run-up process and a steady lighting period, respectively.

4. Run-up

The light output of the discharge lamp 4 rises with growth in the ark discharge. The way the light output rises is specified in a standard. Thus, the control circuit 30 monitors the first output voltage Vo1, the second output voltage Vo2 and the lamp current IL. and adjusts, by feedback, the duty ratio of the on and off of the first switching element M1 and the second switching element M2 so that the light output (electric power) complied with the standard can be obtained. The discharge lamp lighting circuit 100 raises rapidly the light output of the discharge lamp 4 in a run-up period and therefore an overpower higher than the rated power is temporarily supplied. After this, the lamp voltage and the lamp current IL are stabilized at approximately 45 V and 0.8 A, respectively, so that the supplied power is brought closer to the rated power (35 W) (See FIG. 4A).

5. Steady lighting

As the light output of the discharge lamp 4 has stabilized after going through the run-up process, the power supplied to the discharge lamp 4 is stabilised at the rated value of 35 W see FIG. 4B). Note that the waveforms of drive voltage VL and lamp current IL shown in FIGS. 4A and 4B, which are presented in a simplified manner for the ease of viewing, practically have a frequency range of 250 Hz to 750 Hz.
The above has described the operation of the discharge lamp lighting circuit 100 according to the present embodiment. This discharge lamp lighting circuit 100 has the following advantages over the conventional discharge lamp lighting circuits.
(1) When the voltage amplifier circuit 28 charges the starter capacitor 26 to break down the discharge lamp 4, the first current limiting resistor R2 and the second current limiting resistor R3 connected to an input stage of the starter circuit 20 limit the value of current inputted to the voltage amplifier circuit 28. This can prevent a high current in the form of pulses from flowing through elements, such as the third rectifier diode D3, the fourth rectifier diode D4, the fifth rectifier diode D5 and the sixth rectifier diode D6, in a voltage amplifying process performed by the voltage amplifier circuit 28. As a result, smaller and inexpensive elements may be used as those diodes and therefore the size of the starter circuit 20 can be made smaller and the cost can be cut down.
(2) The third switch SW3 is a switch used to charge the lighting assistant capacitor C4. At the same time this third switch SW3 is also used to shut off the bypass current flowing through the bypass resistor R4 after the discharge lamp 4 lights up. Accordingly, the number of switches can be reduced by one when the lighting assistant function and the loss reducing function are to be performed. Thus, the structure employed by the present embodiment contribute to reducing the circuit scale and cutting down the cost.

(3) When the starter capacitor 26 is charged, the on-period limiting circuit 32 operates in a manner such that the higher the battery voltage Vat is, the more the on-period of the first control pulse signal S1 is shortened. Thus the degree of dependence of the energy supplied to the secondary winding L2 side via the first transformer 14 on the battery voltage Vbat reduces. As a result, the pulse interval with respect to generating the initial high-voltage pulse can be stabilized against the battery voltage Vbat variation. Hence, higher-quality lighting characteristics can be achieved.

A description is now given of a comparative technique examined by the inventors to further clarify the advantages of the discharge lamp lighting circuit 100.

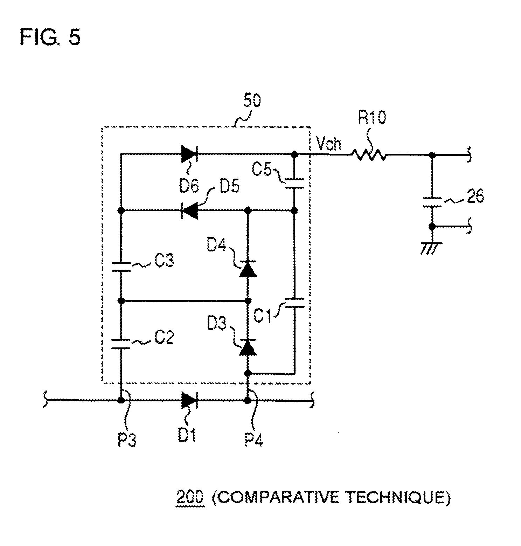

FIGS. 5 is a circuit diagram showing a voltage amplifier circuit 50 of a discharge lamp lighting circuit 200 according to a comparative technique and its periphery. In an input stage of a voltage amplifier circuit 50, no current limiting resistor is provided and, instead, a final-stage current limiting resistor R10 is connected on a path of the current flowing from an output stage of the voltage amplifier circuit 50 to the starter capacitor 26.

Note that even if no buffer capacitor C5 is provided, the voltage amplifier circuit 50 can theoretically charge up to a set voltage (e.g., 1200 V) . However, the inventors had found that if the resistance value of the final-stage current limiting resistor R10 is large, the starter capacitor 26 cannot be charged up to 1200 V due to the reverse recovery characteristics of rectifier diodes and the junction capacitance thereof in reality. Hence, a buffer capacitor C5 is additionally provided in a precious stage of the final-stage current limiting resistor R10 so as to buffer the output of the voltage amplifier circuit 50.

The inventors had examined the comparative technique as illustrate in FIG. 5 and had pointed out the following problems 1 to 3:

1. In a load-open state, it is possible that the voltage of, for instance, 1200 V amplified finally by the voltage amplifier circuit 50 may be applied to the final-stage current limiting resistor R10 by the voltage amplifier circuit 50. Thus the loss in the final-stage current limiting resistor R10 is large. A resistive element with such a high voltage tolerance should be used. In some cases, a plurality of such resistive elements should be used. This proves to be disadvantageous in terms of the size and cost.

2. If the resistance value of the final-stage current limiting resistor R10 is large, the buffer capacitor C5 must be provided, thereby increasing the cost.

3. The final-stage current limiting resistor R10 is arranged at the output stage of the voltage amplifier circuit 50. Thus, there are periods of time when a current with actual measurement value of about 5 A in the form of pulses flows through elements within the voltage amplifier circuit 50. Such elements within the voltage amplifier circuit 50 are, for example, the third rectifier diode D3, the fourth rectifier diode D4, the fifth rectifier diode D5, and the sixth rectifier diode D6. Accordingly, large-size diodes must be used for these rectifier diodes, which proves to be disadvantageous in terms of the size and cost.

By employing the discharge lamp lighting circuit 100 according to the present embodiment, the final-stage current limiting resistor R10 and the buffer capacitor C5 are no longer required. Thus the problems pointed out in the above 1 and 2 are resolved. Since a current limiting resistor is arranged at the input stage, the problem pointed out in the above 3 is also resolved.

The operation of and advantageous effects achieved by the discharge lamp lighting circuit 100 has been described above.

Next, a description is given of modifications concerning the position there a current limiting resistor is to be provided. In the present embodiment, a description has been given of a case where the first current limiting resistor R2 and the second current limiting resistor R3 are connected to the first input terminal P3 and the second input terminal P4 of the starter circuit 20, respectively. In a first modification and a second modification, a current limiting resistor (and two current limiting resistors in the second modification) is (are) provided in a voltage amplifier circuit and on a current path leading from the cathode of the first rectifier diode D1 to a high-voltage-side terminal of the second capacitor C2.

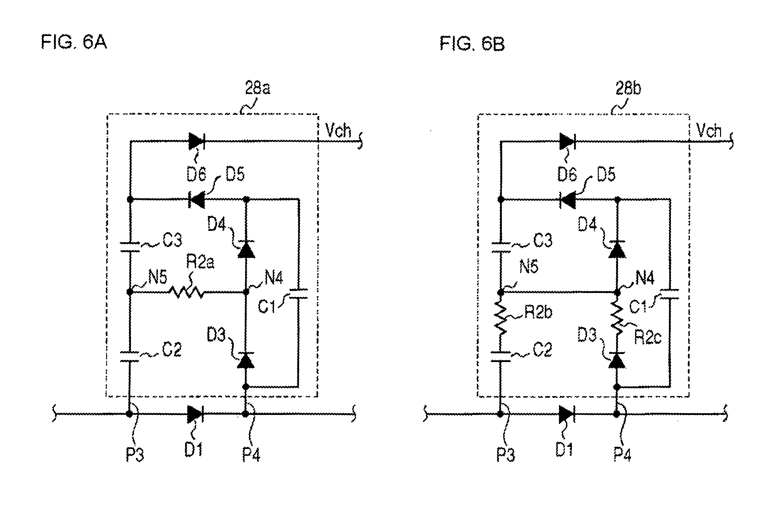

FIGS. 6A and 6B are circuit diagrams each showing a voltage amplifier circuit and its periphery according to modifications.

FIG. 6A is a circuit diagram showing a voltage amplifier circuit 28a and its periphery according to the first modification. The voltage amplifier circuit 28a has a current limiting resistor R2a therein. The current limiting resistor R2a is arranged between a fourth connection node N4, which connects the third rectifier diode D3 and the fourth rectifier diode D4, and a fifth connection node N5, which connects the second capacitor C2 and the third capacitor C3.

FIG. 6B is a circuit diagram showing a voltage amplifier circuit 28b and its periphery according to the second modification. The voltage amplifier circuit 28b has a first current limiting resistor R2b and a second current limiting resistor R2c therein.

The first current limiting resistor R2b is arranged between the second capacitor C2 and the fifth connection node N5. The second current limiting resistor R2c is arranged between the third rectifier diode D3 and the fourth connection node N4. As described above, the arrangement and configuration of the current limiting resistor or current limiting resistors may be available in a variety of variations and may be selected as appropriate depending on the situation where the discharge lamp lighting circuit 100 is used.

The present invention has been described by referring to the above-described embodiments.

In the present embodiment, a description has been given of a case where the discharge lamp lighting circuit 100 includes the first current limiting resistor R2 and the second current limiting resistor R3. However, this should not be considered as limiting and, for example, a current limiting resistor may be connected to only one of two input terminals of the starter circuit 20. In such a case, a high current in the form of pulses can also be prevented from flowing through the elements. It is to be noted here that from the viewpoints of power consumption and heat radiation performance, the current limiting resistors are preferably connected to both of the input terminals of the starter circuit 20.

In the present embodiment, a description has been given of a so-called double converter type discharge lamp lighting circuit equipped with the first DC-DC converter CONV1 and the second DC-DC converter CONV2. However, this should not be considered as limiting and, for example, the starter circuit 20 in the present embodiment may be incorporate into a so-called single converter type discharge lamp lighting circuit where the first drive voltage Vol supplied by the first DC-DC converter CONV1 is AC-converted by an H-bridge circuit so as to be applied to the discharge lamp 4. In this case, the same advantageous effects as those described in the present embodiment are achieved.

A description has been given of a case where the switch to turn off the bypass resistor R4 after the lighting and the switch for the lighting assistant capacitor C4 are arranged as a single switch. The present embodiment is not limited thereto and, for example, separate switches may be provided for their respective purposes.

In the present embodiment, a description has been given of a case where the positive drive voltages Vo1 and Vo2 are generated and then applied to the discharge lamp 4 (called a positive lighting). In a modification, negative drive voltages Vo1 and Vo2 may be generated to drive the discharge lamp 4 (called a negative lighting). In such a case, the conducting directions of the first rectifier diode D1 and the second rectifier diode D2, the polarities of secondary windings of the first and second transformers T1 and T2, the switching directions of the switching elements M1 and M2 connected respectively to the secondary winding sides of the first and second transformers T1 and T2, the conducting directions of rectifiers connected in parallel with said switching elements M1 and M2, and direction of the rectifier diodes contained in the voltage amplifier circuit 28 may be reversed.

Though in the present embodiment the automotive lamp has been described merely as a example, the applications of the present invention are widely applicable to a discharge lamp lighting circuit where a current limiting resistor (current limiting resistors) is (are) provided at the input stage of the starter circuit.

In the present embodiment, a description has been given of a case where the discharge lamp is driven by the AC drive voltage. However, the present embodiment is not limited thereto and the discharge lamp may be applicable to a lighting circuit driven by a DC drive voltage.

**Claims**

1. A discharge lamp lighting circuit comprising:

   a DC-DC converter (CONV1) configured to output a drive voltage to be supplied to a discharge lamp (4) to be driven; and
   a starter circuit (20) configured to generate a high-voltage pulse to break down the discharge lamp (4),
   the DC-DC converter (CONV1) including:

   an output diode (D1) having an anode to which a varying voltage is applied any having a cathode; and
   an output capacitor (Co1) for outputting the drive voltage, wherein the output capacitor has a first and connected to the cathode of the output diode (D1) and a second end connected to a ground terminal

   the starter circuit (20) including:

   a high-voltage transformer (22) having a secondary winding (L4) connected to the discharge lamp (4); and
   a voltage amplifier circuit (28) for amplifying the drive voltage and generating a charging voltage to be supplied to a primary winding (L3) of the high-voltage transformer (22), the voltage amplifier circuit (28) having a first input terminal (P3) connected to the anode of the output diode (D1), a second input terminal (P4) connected to the cathode of the output diode (D1), and an outpout stage for supplying the charging voltage,
the discharge lamp lighting circuit further comprising a first current limiting element (R2), for limiting a current supplied to the starter circuit, the first current limiting element being provided between the anode of the output diode (D1) and the first input terminal (P3),

**characterised by**: a second current limiting element (R3), for limiting a current supplied to the starter circuit the second current limiting element being provided between the cathode of the output diode (D1) and the second input terminal (P4);
wherein no current limiting element is provided at the output stage of the voltage amplifier circuit (28).

2. A discharge lamp lighting circuit according to Claim 1, the voltage amplifier circuit (28) including:

 a charging capacitor (C2) having a first end and a second end, the first end of the charging capacitor (C2) being connected to the first input terminal (P3); and
 other current limiting elements (R2a, R2b, R2c), for limiting a current, which are provided on a current path leading from the cathode of the output diode (D1) to the second end of the charging capacitor (C2).

3. A discharge lamp lighting circuit according to Claim 1 or Claim 2, further comprising resistors (R4, R5) and a bypass switch (SW3) which are connected in series across the output capacitor (Co1),
 wherein the bypass switch (SW3) turns off as the discharge lamp (4) lights up.

4. A discharge lamp lighting circuit according to any one of Claim 1 to Claim 3, the DC-DC converter (CONV1) including:

 an input transformer (14); and
 a control switch (M1) connected in series with a primary winding (L1) of the input transformer (14),
 wherein the output diode (D1) and the output capacitor (Co1) are connected in series with a secondary winding (L2) the input transformer (14), and the drive voltage is controlled by turning on and off the control switch (M1), the discharge lamp lighting circuit further comprising a control unit (30) configured to control the on and off of the control switch (M1) and configured to shorten a period during which the control switch (M1) is on as an input voltage supplied to the primary winding of the input transformer (14) from an external power supply (6) increases by the time when the starter circuit (20) generates the high-voltage pulse.

5. A discharge lamp lighting circuit according to any one of Claim 1 to Claim 4, wherein the discharge lamp lighting circuit is formed on a ceramic substrate, and
 wherein the current limiting elements (R2, R3, R2a, R2b, R2c) are formed on the ceramic substrate as printed resistors.

6. A method for controlling the lighting of a discharge lamp (4), the method including:

 generating a high-voltage pulse, by a starter circuit (20), using a power supplied from an output side of a DC-DC converter which applies a drive voltage to the discharge lamp, wherein the DC-DC converter (CONV1) includes:
 an output diode (D1) having one anode to which a varying voltage is applied and having a cathode; and
 an output capacitor (Col) having a first end connected to the cathode of the output diode (D1) and having a second end connected to a ground terminal; wherein the starter circuit (20) includes:
 a high-voltage transformer (22) having a secondary winding (L4) connected to the discharge lamp (4); and
 a voltage amplifier circuit (28) for amplifying the drive voltage and generating a charging voltage to be supplied to a primary winding (L3) of the high-voltage transformer (22), the voltage amplifier circuit (28) having a first input terminal (P3) connected to the anode of the output diode (D1), a second input terminal (P4) connected to the cathode of the output diode (D1), and an output stage for supplying the charging voltage;
 applying the high-voltage pulse across the discharge lamp to cause the discharge lamp to start to light up;
 limiting a current supplied to the starter circuit (20) by connecting a first element (R2) between the anode of the output diode (D1) and the first input terminal (P3); the method **characterised by**:
 limiting a current supplied to the starter circuit (20) by connecting a second current limiting element (R3) between the cathode of the output diode (D1) and the second input terminal (P4); and not providing a current limiting element at the output stage of the voltage amplifier circuit (28).

## EP 2 219 422 B1

**Patentansprüche**

1.  Lichtstromkreis für eine Entladungslampe mit:

    einem Gleichstrom-Gleichstrom-Wandler (CONV1), der konfiguriert ist, um eine an eine zu treibende Entladungslampe (4) zu liefernde Ansteuerspannung auszugeben; und
    einer Starterschaltung (20), die konfiguriert ist, um einen Hochspannungsimpuls zu erzeugen, um einen Durchschlag der Entladungslampe (4) herbeizuführen,
    wobei der Gleichstrom-Gleichstrom-Wandler (CONV1) aufweist:

    eine Ausgangsdiode (D1) mit einer Anode, an die eine variierende Spannung angelegt wird, und einer Kathode; und
    einen Ausgangskondensator (Co1) zum Ausgeben der Ansteuerspannung, wobei ein erstes Ende des Ausgangskondensators mit der Kathode der Ausgangsdiode (D1) und ein zweites Ende mit einem Erdanschluss verbunden ist;

    wobei die Starterschaltung (20) aufweist:

    einen Hochspannungstransformator (22) mit einer Sekundärwicklung (24), die mit der Entladungslampe (4) verbunden ist; und
    eine Spannungsverstärkerschaltung (28) zum Verstärken der Ansteuerspannung und zum Erzeugen einer an eine Primärwicklung (23) des Hochspannungstransformators (22) zu liefernden Ladespannung, wobei die Spannungsverstärkerschaltung (28) einen ersten Eingangsanschluss (P3) hat, der mit der Anode der Ausgangsdiode (D1) verbunden ist, einen zweiten Eingangsanschluss (P4), der mit der Kathode der Ausgangsdiode (D1) verbunden ist, und eine Ausgangsstufe zum Liefern der Ladespannung;

    wobei der Entladungslampen-Lichtstromkreis des Weiteren ein erstes Strombegrenzungselement (R2) zum Begrenzen eines an die Starterschaltung gelieferten Stroms aufweist, wobei das erste Strombegrenzungselement zwischen der Anode der Ausgangsdiode (D1) und dem ersten Eingangsanschluss (P3) vorgesehen ist, **gekennzeichnet durch**: ein zweites Strombegrenzungselement (R3) zum Begrenzen eines an die Starterschaltung gelieferten Stroms, wobei das zweite Strombegrenzungselement zwischen der Kathode der Ausgangsdiode (D1) und dem zweiten Eingangsanschluss (P4) vorgesehen ist;
    wobei an der Ausgangsstufe der Spannungsverstärkerschaltung (28) kein Strombegrenzungselement vorgesehen ist.

2.  Lichtstromkreis für eine Entladungslampe nach Anspruch 1, wobei die Spannungsverstärkerschaltung (28) aufweist:

    einen Ladekondensator (C2) mit einem ersten Ende und einem zweiten Ende, wobei das erste Ende des Ladekondensators (C2) mit dem ersten Eingangsanschluss (P3) verbunden ist; und
    weitere Strombegrenzungselemente (R2a, R2b, R2c) zum Begrenzen eines Stroms, die in einem Strompfad vorgesehen sind, der von der Kathode der Ausgangsdiode (D1) zu dem zweiten Ende des Ladekondensators (C2) führt.

3.  Lichtstromkreis für eine Entladungslampe nach Anspruch 1 oder Anspruch 2, der des Weiteren Widerstände (R4, R5) und einen Überbrückungsschalter (SW3) aufweist, die parallel zum Ausgangskondensator (Co1) in Reihe geschaltet sind,
    wobei sich der Überbrückungsschalter (SW3) abschaltet, wenn die Entladungslampe (4) aufleuchtet.

4.  Lichtstromkreis für eine Entladungslampe nach einem der Ansprüche 1 bis 3, wobei der Gleichstrom-Gleichstrom-Wandler (CONV1) aufweist:

    einen Eingangstransformator (14); und
    einen Steuerschalter (M1), der mit einer Primärwicklung (21) des Eingangstransformators (14) in Reihe geschaltet ist,
    wobei die Ausgangsdiode (D1) und der Ausgangskondensator (Co1) mit einer Sekundärwicklung (L2) des Eingangstransformators (14) in Reihe geschaltet sind und die Antriebsspannung durch An- und Ausschalten des Steuerschalters (M1) gesteuert wird,
    wobei der Entladungslampen-Lichtstromkreis des Weiteren eine Steuereinheit (30) aufweist, die konfiguriert ist, um das An- und Ausschalten des Steuerschalters (M1) zu steuern und die Zeitspanne, während der der Steuerschalter (M1) angeschaltet ist, zu verkürzen, wenn eine Eingangsspannung, die an die Primärwicklung des Eingangstransformators (14) von einer externen Stromversorgung (6) geliefert wird, sich bis zu dem Zeitpunkt erhöht, zu dem die Starterschaltung (20) den Hochspannungsimpuls erzeugt.

5. Lichtstromkreis für eine Entladungslampe nach einem der Ansprüche 1 bis 4, wobei der Entladungslampen-Lichtstromkreis auf einem Keramiksubstrat ausgebildet ist, und
wobei die Strombegrenzungselemente (R2, R3, R2a, R2b, R2c) als gedruckte Widerstände auf dem Keramiksubstrat ausgebildet sind.

6. Verfahren zum Steuern der Beleuchtung einer Entladungslampe (4), wobei das Verfahren umfasst:

Erzeugen eines Hochspannungsimpulses durch eine Starterschaltung (20) mittels eines von einer Ausgangsseite eines Gleichstrom-Gleichstrom-Wandlers gelieferten Stroms, der eine Ansteuerspannung an die Entladungslampe anlegt;
wobei der Gleichstrom-Gleichstrom-Wandler (CONV1) aufweist:

eine Ausgangsdiode (D1) mit einer Anode, an die eine variierende Spannung angelegt wird, und einer Kathode; und
einen Ausgangskondensator (Co1) mit einem ersten Ende, das mit der Kathode der Ausgangsdiode (D1) verbunden ist, und einem zweiten Ende, das mit einem Erdanschluss verbunden ist;

wobei die Starterschaltung (20) aufweist:

einen Hochspannungstransformator (22) mit einer Sekundärwicklung (24), die mit der Entladungslampe (4) verbunden ist; und
eine Spannungsverstärkerschaltung (28) zum Verstärken der Ansteuerspannung und zum Erzeugen einer an eine Primärwicklung (23) des Hochspannungstransformators (22) zu liefernden Ladespannung, wobei die Spannungsverstärkerschaltung (28) einen ersten Eingangsanschluss (P3) hat, der mit der Anode der Ausgangsdiode (D1) verbunden ist, einen zweiten Eingangsanschluss (P4), der mit der Kathode der Ausgangsdiode (D1) verbunden ist, und eine Ausgangsstufe zum Liefern der Ladespannung;

Anlegen des Hochspannungsimpulses über die Entladungslampe, um zu veranlassen, dass die Entladungslampe zu leuchten anfängt;
Begrenzen eines an die Starterschaltung (20) gelieferten Stroms durch Schalten eines ersten Begrenzungselements (R2) zwischen die Anode der Ausgangsdiode (D1) und den ersten Eingangsanschluss (P3);
wobei das Verfahren **gekennzeichnet ist durch**:
Begrenzen eines an die Starterschaltung (20) gelieferten Stroms **durch** Schalten eines zweiten Strombegrenzungselements (R3) zwischen die Kathode der Ausgangsdiode (D1) und den zweiten Eingangsanschluss (P4); und
Nichtvorsehen eines Strombegrenzungselements an der Ausgangsstufe der Stromverstärkerschaltung (28).

**Revendications**

1. Circuit d'allumage de lampe à décharge comprenant :

un convertisseur CC-CC (CONV1) conçu pour produire une tension d'entraînement destinée à être fournie à une lampe à décharge (4) à piloter ; et
un circuit de starter (20) configuré pour générer une impulsion à haute tension pour surmonter la lampe à décharge (4),
le convertisseur CC-CC (CONV1) comprenant :
une diode de sortie (D1) ayant une anode à laquelle une tension qui varie est appliquée et ayant une cathode ; et
un condensateur de sortie (Co1) pour produire la tension d'entraînement, dans lequel le condensateur de sortie a une première extrémité connectée à la cathode de la diode de sortie (D1) et une deuxième extrémité connectée à une borne de terre,
le circuit de starter (20) comprenant :
un transformateur haute tension (22) ayant un enroulement secondaire (23) connecté à la lampe à décharge (4) ; et

un circuit amplificateur de tension (28) destiné à amplifier la tension d'entraînement et à générer une tension de charge destinée à être fournie à un enroulement primaire (13) du transformateur haute tension (22), le circuit amplificateur de tension (28) ayant une première borne d'entrée (P3) connectée à l'anode de la diode de sortie (D1), une deuxième borne d'entrée (P4) connectée à la cathode de la diode de sortie (D1), et un étage de sortie pour fournir la tension de charge,

le circuit d'allumage de lampe à décharge comprenant en outre un premier élément limiteur de courant (R2), destiné à limiter un courant fourni au circuit de starter, le premier élément limiteur de courant étant fourni entre l'anode de la diode de sortie (D1) et la première borne d'entrée (P3),

**caractérisé par** : un deuxième élément limiteur de courant (R3) destiné à limiter un courant fourni par le circuit de starter, le deuxième élément limiteur de courant étant fourni entre la cathode de la diode de sortie (D1) et la deuxième borne d'entrée (P4) ;

dans lequel aucun élément limiteur de courant n'est fourni à l'étage de sortie du circuit amplificateur de tension (28).

2. Circuit d'allumage de lampe à décharge selon la revendication 1, le circuit amplificateur de tension (28) comprenant :

un condensateur de charge (C2) ayant une première extrémité et une deuxième extrémité, la première extrémité du condensateur de charge (C2) étant connectée à la première borne d'entrée (P3) ; et

d'autres éléments limiteurs de courant (R2a, R2b, R2c), destinés à limiter un courant, lesquels sont fournis sur une trajectoire de courant menant de la cathode de la diode de sortie (D1) à la deuxième extrémité du condensateur de charge (C2).

3. Circuit d'allumage de lampe à décharge selon la revendication 1 ou la revendication 2, comprenant en outre des résistances (R4, R5) et un commutateur de dérivation (SW3) qui sont connectés en série à travers le condensateur de sortie (Co1),

dans lequel le commutateur de dérivation (SW3) se coupe lorsque la lampe à décharge (4) s'allume.

4. Circuit d'allumage de lampe à décharge selon l'une quelconque des revendications 1 à 3, le convertisseur CC-CC (CONV1) comprenant :

un transformateur d'entrée (14) ; et

un interrupteur de commande (M1 connecté en série à un enroulement primaire (21) du transformateur d'entrée (14),

dans lequel la diode de sortie (D1) et le condensateur de sortie (Co1) sont connectés en série à un enroulement secondaire (22) du transformateur d'entrée (14), et la tension d'entraînement est commandée en activant et en désactivant l'interrupteur de commande (M1) ,

le circuit d'allumage de lampe à décharge comprenant en outre une unité de commande (30) conçue pour commander l'activation et la désactivation de l'interrupteur de commande (M1) et conçue pour raccourcir une période pendant laquelle l'interrupteur de commande (M1) est activé lorsque la tension d'entrée fournie à l'enroulement primaire du transformateur d'entrée (14) par une alimentation externe (6) augmente une fois que le circuit de starter (20) génère l'impulsion à haute tension.

5. Circuit d'allumage de lampe à décharge selon l'une quelconque des revendications 1 à 4, où le circuit d'allumage de lampe à décharge est formé sur un substrat en céramique, et

dans lequel les éléments limiteurs de courant (R2, R3, R2a, R2b, R2c) sont formés sur le substrat en céramique en tant que résistances imprimées.

6. Procédé pour commander l'allumage d'une lampe à décharge (4), le procédé comprenant :

la production d'une impulsion à haute tension, par un circuit de starter (20), en utilisant une alimentation fournie par le côté de sortie d'un convertisseur CC-CC qui applique une tension d'entraînement à la lampe à décharge ;

dans lequel le convertisseur CC-CC (CONV1) comprend :

une diode de sortie (D1) ayant une anode à laquelle une tension qui varie est appliquée et ayant une cathode ; et

un condensateur de sortie (Co1) ayant une première extrémité connectée à la cathode de la diode de sortie (D1) et ayant une deuxième extrémité connectée à une borne de terre ; dans lequel le circuit de starter (20) comprend :

un transformateur haute tension (22) ayant un enroulement secondaire (L4) connecté à la lampe à décharge (4) ; et

un circuit amplificateur de tension (28) destiné à amplifier la tension d'entraînement et à générer une tension de charge destinée à être fournie à un enroulement primaire (L3) du transformateur haute tension (22), le circuit amplificateur de tension (28) ayant une première borne d'entrée (P3) connectée à l'anode de la diode de sortie (D1), une deuxième borne d'entrée (P4) connectée à la cathode de la diode de sortie (D1), et un étage de sortie pour fournir la tension de charge,

l'application de l'impulsion à haute tension à travers la lampe à décharge pour faire en sorte que la lampe à décharge commence à s'allumer ;

la limitation d'un courant fourni au circuit de starter (20) en connectant un premier élément limiteur entre l'anode de la diode de sortie (D1) et la première borne d'entrée (P3) ; le procédé **caractérisé par** :

la limitation d'un courant fourni au circuit de starter (20) en connectant un deuxième élément limiteur de courant (R3) entre la cathode de la diode de sortie (D1) et la deuxième borne d'entrée (P4) ; et

la non-fourniture d'un élément limiteur de courant à l'étage de sortie du circuit amplificateur de tension (28).

FIG. 1

FIG. 2

32

FIG. 3

FIG. 4A

FIG. 4B

FIG. 5

200 (COMPARATIVE TECHNIQUE)

FIG. 6A

FIG. 6B

EP 2 219 422 B1

**EP 2 219 422 B1**

## REFERENCES CITED IN THE DESCRIPTION

**Patent documents cited in the description**

- JP 3384323 B
- US 20030111969 A
- JP 10321393 B
- US 20070247088 A